Europäisches Patentamt

European Patent Office

Office européen des brevets

(11) Publication number: **0 359 481**

**A2**

# EUROPEAN PATENT APPLICATION

(21) Application number: 89309120.7

(22) Date of filing: 08.09.89

(51) Int. Cl.5: **B64C 9/16** , **B64C 13/28**

(30) Priority: 09.09.88 GB 8821220

(43) Date of publication of application:
21.03.90 Bulletin 90/12

(84) Designated Contracting States:
DE FR GB

(71) Applicant: **BRITISH AEROSPACE PUBLIC LIMITED COMPANY**
**11 Strand**
**London WC2N 5JT(GB)**

(72) Inventor: **Laceby, Maurice A.**
**P.O. Box 77 Filton House**
**Bristol, BS99 7AR(GB)**

(74) Representative: **Hedley, Nicholas James Matthew et al**
**TZ Gold & Company 9 Staple Inn**
**London WC1V 7QH(GB)**

(54) Fuselage mounted flap drives for wing trailing edge flaps.

(57) A fuselage mounted flap drive is provided for supporting and controlling aircraft flaps (27) at their inboard end, the drive has a beam (28) mounted within the aircraft fuselage (26), a carriage (29) slidable along the beam, a first axle (31) held by the carriage for rotatably supporting the leading portion of the flap and a second axle (38) also held by the carriage for supporting a link (32) that sets the attitude of the flap so that as the carriage is moved along the beam, the flaps are increasingly deployed or retracted, the changing attitude of the flaps depending on the nature of the link.

FIG.1

EP 0 359 481 A2

## FUSELAGE MOUNTED FLAP DRIVES FOR WING TRAILING EDGE FLAPS

This invention relates to trailing edge flaps for aircraft. More particularly it concerns the mounting of flap drives and the associated structural support at the extreme inboard end of a flap, that is, at the flap termination adjacent the fuselage.

Our copending U.K. Patent Application No. 8817344.8 relates to and teaches a flap system which is readily adaptable from a single slotted to a double slotted configuration. Wing trailing edge flap systems generally comprise a series of spanwise extending flap portions supported at two or more locations along their span, off the wing trailing edge structure. As in the case of the flap arrangement of 8817344.8, each support may include a flap mounting beam located beneath and extending rearwardly from the wing, and a double element flap assembly, including flap actuating means and flap attitude control means mounted upon the beam, said flap assembly being selectively movable from a stowed to a fully deployed position. The flap assembly comprises a primary flap portion and an auxiliary flap portion and the flap actuator and attitude control means are so conformed that over an initial flap deployment stage both flap portions translate rearwardly conjointly and there is no relative angular displacement or separation between them. Continuing rearward translation however causes, by means of linkages associated with the flap attitude control means, and with the auxiliary flap portion, angular downward displacement of the auxiliary flap portion with respect to the primary flap portion and thus a secondary slot is formed therebetween. The primary slot is that formed between the leading edge of the primary flap portion and the trailing edge structure of the wing.

In trailing edge flap systems as exemplified by Patent Application No. 8817344.8, the flap assembly is supported off the flap mounting beam generally by means of a flap support carriage which is in rolling engagement with the upper portions of the mounting beam, i.e. the flap is supported above the mounting beam. That is a generally acceptable arrangement at each spanwise support location other than at the extreme inboard end of the flap system, where the inboard flap terminates immediately adjacent to the fuselage side or to the fuselage/wing root fairing. In this location the wing trailing edge structure may not be suitable for attachment of the mounting beam. It is known to provide a mounting within the fuselage or its associated wing root fairing. It is the object of the present invention to provide a novel fuselage mounted drive and associated structural support for a trailing edge flap, which may be a double slotted trailing edge flap or a main (single) flap.

According to the present invention there is provided a fuselage mounted flap drive and mounting arrangement for a wing trailing edge flap assembly including a mounting beam mounted upon an aircraft fuselage substantially adjacent the inboard end of said trailing edge flap assembly, a flap support carriage in rolling engagement with said mounting beam and actuating means for moving said flap support carriage along said beam; wherein the flap support carriage includes a first outwardly extending rotatable axle means for supporting the flap at its inboard end and transmitting motion from said actuating means and a second outwardly extending fixed axle means providing a forward pivotal attachment for an attitude control link interconnecting said carriage and the said flap.

In one embodiment, the flap assembly comprises a forward primary flap portion and a pivotally interconnected rearward auxiliary flap portion for angular displacement with respect to said primary flap portion at selected flap settings in which case the rotatable axle supports the primary flap portion while the attitude control link controls the attitude of both the primary flap portion and the attitude of the auxiliary flap portion.

One embodiment of the invention will now be described, by way of example only, with reference to the following drawings, in which:-

Figure 1 illustrates, schematically, a fuselage mounted flap drive according to the invention;

Figure 2 illustrates a side elevation on a typical fuselage mounted flap drive installation in accordance with the invention view in direction of Arrow II in Figure 1;

Figure 3 is a section through the installation looking along a line III-III in Figure 2;

Figure 4 is a side elevaton showing a typical wing mounted trailing edge flap installation in stowed configuration; and

Figure 5 is the same installation as Figure 4 but with the flap deployed in double slotted configuration; and

Figure 6 is a side elevation showing a trailing edge flap installation that is driven by the drive of Figure 1.

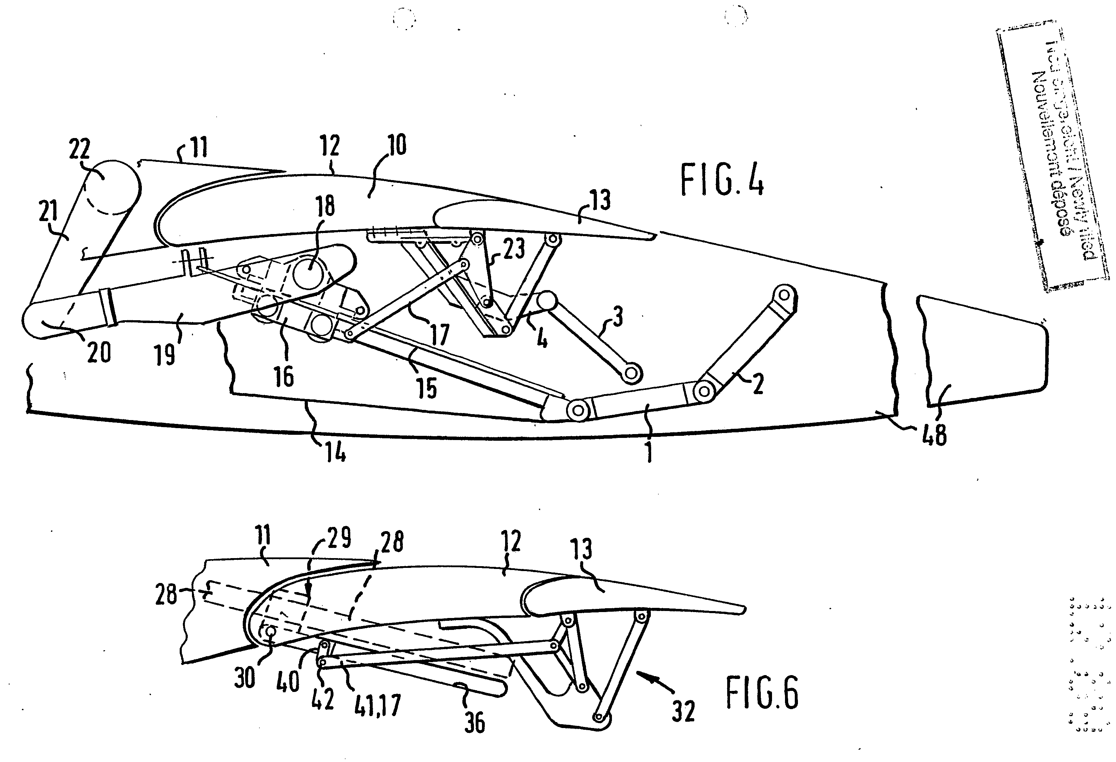

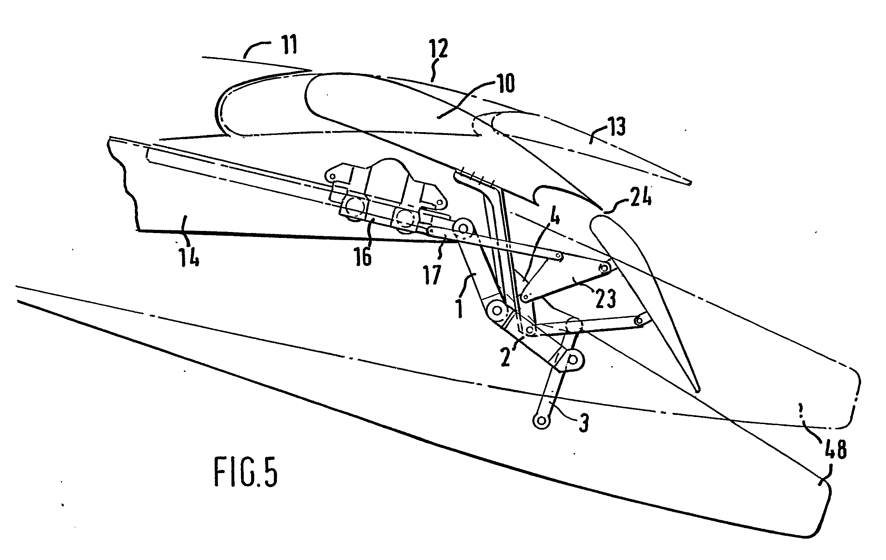

Referring firstly to Figures 4 and 5, which illustrates the trailing edge flap arrangement of our copending U.K. Patent Application No. 8817344.8. The arrangement shows a double slotted flap assembly 10 extending rearwardly from a wing trailing edge portion 11 and comprising a primary flap portion 12 and an interconnected auxiliary flap portion 13. The flap assembly is supported upon a mounting beam 14 extending rearwards from and located below the undersurface of the wing trailing edge portion 11. The mounting beam 14 has an inclined upper diagonal rolling surface 15 for engaging a flap support carriage 16 with which it is in rolling engagement. The forward flap element 12 is pivotally supported upon the carriage 16 at 18. There is an interconnection between the carriage 16 and the auxiliary flap portion 13 comprising an attitude control link 17. The flap control mechanism is housed within a housing 48 which is supported by links 1 and 2 to the beam 14 and by links 3 and 4 to the primary flap portion 12. Coincident with the pivotal attachment 18 is a flap actuating rod 19 pivotally located at its forward end 20 to a level arm 21 extending downwardly from a rotary actuator 22 mounted upon the wing structure. By this means the flap assembly is driven rearwardly over a range of flap settings. Over at least the initial settings, the flap assembly effectively forms a one-element flap assembly, i.e. they combine in the datum cruise condition up to and including the take-off setting at which a simple convergent slot 25 is formed between the leading edge of the primary flap portion 12 and the wing (this position is the upper position shown in Figure 5). Continuing rearward movement, as used in the approach and landing modes, will initiate an associated linear displacement of the attitude control link 17 effecting via the linkage assembly 23 controlled rotation of the auxiliary flap 13 with respect to the flap element 12 and an optimised convergent slot 24 will be formed between the primary and the auxiliary flap portions 12 and 13 (this position is the lower position shown in Figure 5). The housing 48 is pivoted downwardly out of the way of the flaps as the latter are deployed by virtue of links 1 to 4.

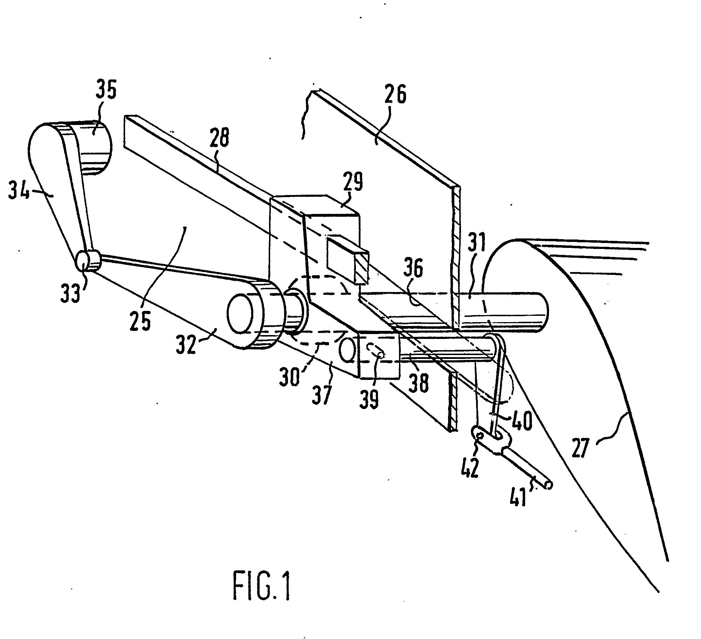

While this type of mounting will be effective at spanwise flap support locations along the wing, on the most inboard flap element and particularly the extreme inboard end adjacent the fuselage, the wing structure is often not compatible with such a flap control arrangement. In this event the flap is supported off the fuselage structure and the flap control is contained within a wing-to fuselage fairing as shown in Figures 1-3 inclusive.

This arrangement is illustrated schematically in Figure 1, in which the flap support and actuating assembly 25 in contained within the wing/fuselage fairing 26. As will be seen, the inboard end 27 of the flap assembly 10 lies adjacent to the fairing 26. A mounting beam 28 lies substantially fore and aft and includes a carriage 29 in rolling engagement upon it. The carriage includes a self-aligning bearing 30 with a flap mounting torque tube 31 extending therethrough and including at its inboard end a flap actuating arm 32 pivotally connected at 33 to a lever arm 34 extending from a rotary actuator 35. The torque tube 31 can rotate about its own axis within bearing 30. The torque tube 31 passes through a longitudinal slot 36 in the wing/fuselage fairing 26. The carriage 29 is extended rearwards at 37 and carries a fixed axle 38 extending outwardly through the slot 36 so that as the flap moves rearwardly it moves along the same path as the torque tube 31 but does not rotate, being pinned at 39 within the carriage. Its outboard end carries a fixed arm 40 providing a pivotal attachment 42 for an attitude control link 41. From this point aft the mechanism for operation of the double slotted flap is as described above in connection with Figures 4 and 5, that is to say the attitude control link 41 acts in the same way as the link 17 shown in Figures 4 and 5 and is connected by a series of linkages to the double flap arrangement. The arrangement of linkages 32 is shown in Figure 6 where the beam 28 and the carriage are shown in dotted lines and the reference numbers used refer to the parts shown by the same reference numbers in Figure 1 to 5. Needless to say any other form of linkage that moves the primary and auxiliary flaps in a desired manner can be used instead.

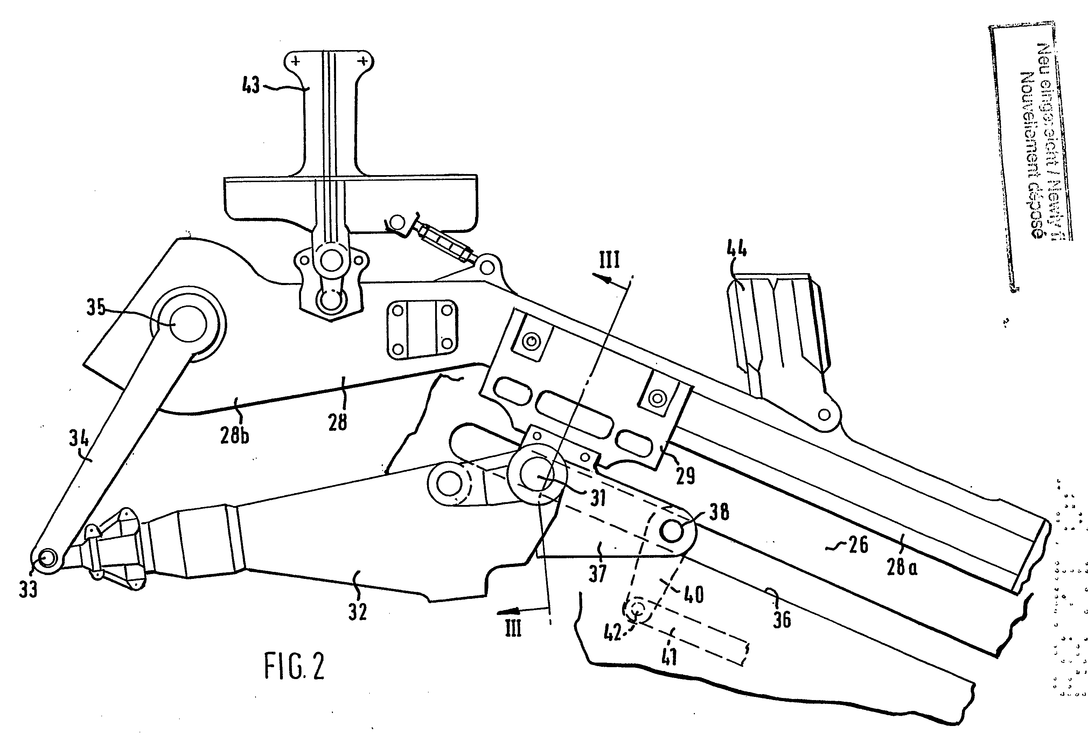

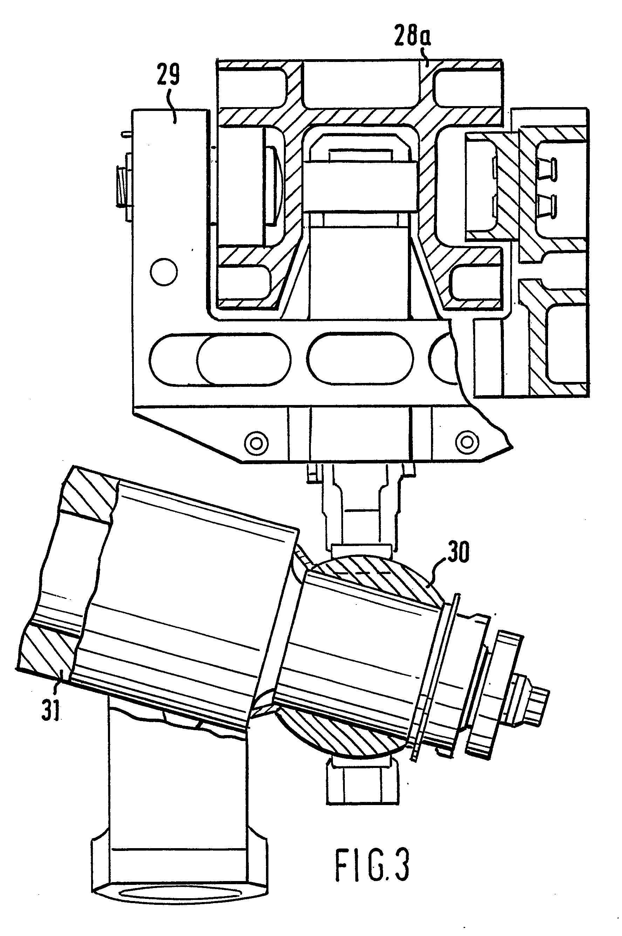

Figures 2 and 3 illustrate an engineered embodiment of the invention in which the mounting beam 28 includes a diagonal portion 28a for supporting a flap carriage 29 in rolling engagement upon it, and a forward substantially horizontal portion 28b mounting a rotary actuator 35 having a lever arm 34 pivotally attached at 33 to flap actuating arm 32, itself rigidly attached to a flap torque tube 31 extending outwardly through the slot 36 in the fairing 26. The carriage 29 includes a rearward extension 37 carrying a fixed axle 38 also extending outwardly through the slot and mounting a fixed arm 40 for connection to the attitude control link 41. The mounting beam 28 is attached to fuselage structure by mounting brackets 43 and 44. In Figure 2 the flap is omitted for clarity.

If a single flap is used instead of the double flap shown in Figures 1, 4 and 5, the arrangement is essentially the same except the support linkages for the auxiliary flap portion 13 are omitted and hence the attitude control link 41 supports the trailing edge of the flap and sets the attitude of the flap.

## Claims

1. A fuselage-mounted flap drive and mounting arrangement for a wing trailing edge flap assembly (10-12) having a leading end and a trailing end, characterised in that the arrangement comprises a mounting beam (28) mounted upon an aircraft fuselage (26) substantially adjacent the inboard end of said trailing edge flap assembly (10-12), a flap support carriage (29) in rolling engagement with said mounting beam and actuating means (32-35) for moving said flap support carriage along said beam and wherein said flap support carriage includes a first outwardly extending axle means (31) for rotatably supporting the leading end of said flap assembly at its inboard end and transmitting motion from said actuating means to said flap assembly and a second outwardly extending axle means (38) providing a forward pivotal attachment for an attitude control link (32) interconnecting said carriage and the trailing end of said flap assembly and setting the attitude of the flap assembly.

2. An arrangement as claimed in claim 1, characterised in that the flap assembly (10-12) comprises a forward primary flap portion (12) and a pivotally interconnected rearward auxiliary flap portion (13) that can be angularly displaced with respect to said primary flap portion at selected flap settings, and wherein the first axle (31) rotatably supports the primary flap portion at its inboard end and transmits motion from said actuating means (32-35) to said primary flap portion (12) and wherein the second axle (38) provides pivotal attachment for an attitude control link (32) interconnecting said carriage (29) with said auxiliary flap portion (13) and with the trailing end of the primary flap portion (12).

3. An arrangement as claimed in claim 1, characterised in that the flap assembly includes a single flap having a leading end and a trailing end and wherein the first axle (31) rotatably supports the leading end and wherein the second axle (32) provides pivotal connection to an attitude control link (32) for supporting the trailing end of the flap and thereby setting the attitude of the flap.

4. An arrangement as claimed in any one of claims 1 to 3, characterised in that the first axle (31) is held by the carriage (29) by a self-aligning bearing (30.

5. An arrangement as claimed in any one of claims 1 to 4, characterised in that the second axle (38) is rigidly held in the carriage (29), wherein the arrangement includes a crank (36) having a first end and a second end and being rigidly connected at the first end to the second axle (38) and pivotally connected at its said second end to the attitude control link (32).

6. An arrangmenet as claimed in claim 1, wherein the fuselage includes a slot adjacent to the beam and wherein the first and the second axles extend through the said slot.

7. An arrangement as claimed in any one of claims 1 to 6, characterised in that the actuating means (32-35) acts on the first axle (31) to move the said carriage (29) along the said beam (28).

FIG.1

FIG. 2

EP 0 359 481 A2

FIG.3

FIG.4

EP 0 359 481 A2

FIG.6

FIG.5

EP 0 359 481 A2